(19) Europäisches Patentamt / European Patent Office / Office européen des brevets

(11) **EP 3 146 840 B1**

(12) **FASCICULE DE BREVET EUROPEEN**

(45) Date de publication et mention de la délivrance du brevet:
**19.08.2020   Bulletin 2020/34**

(51) Int Cl.:
**B27K 3/08** *(2006.01)*      **A01N 33/12** *(2006.01)*
**A01N 43/653** *(2006.01)*   **A01N 47/12** *(2006.01)*
**A01N 65/06** *(2009.01)*    **A01N 65/08** *(2009.01)*
**A01N 65/20** *(2009.01)*    **A01P 3/00** *(2006.01)*
**B27K 3/50** *(2006.01)*

(21) Numéro de dépôt: **16190458.6**

(22) Date de dépôt: **23.09.2016**

(54) **COMPOSITION BIOCIDE POUR LE TRAITEMENT DES BOIS**

BIOZID-ZUSAMMENSETZUNG FÜR DIE HOLZBEHANDLUNG

BIOCIDAL COMPOSITION FOR TREATING WOOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **25.09.2015   FR 1559052**

(43) Date de publication de la demande:
**29.03.2017   Bulletin 2017/13**

(73) Titulaire: **Berkem Developpement**
**24680 Gardonne (FR)**

(72) Inventeurs:
• **FAHY, Olivier**
  **33000 BORDEAUX (FR)**
• **MESSAOUDI, Daouïa**
  **69800 SAINT-PRIEST (FR)**

(74) Mandataire: **Plasseraud IP**
**66, rue de la Chaussée d'Antin**
**75440 Paris Cedex 09 (FR)**

(56) Documents cités:
**WO-A2-2006/116778**

• **SCHULTZ T P ET AL: "Development of environmentally-benign wood preservatives based on the combination of organic biocides with antioxidants and metal chelators", PHYTOCHEMISTRY, PERGAMON PRESS, GB, vol. 61, no. 5, 1 novembre 2002 (2002-11-01), pages 555-560, XP026583678, ISSN: 0031-9422, DOI: 10.1016/S0031-9422(02)00267-4 [extrait le 2002-11-01]**

• **Tor P. Schultz ET AL: "Improving the Performance of Organic Biocides by Using Economical and Benign Additives" In: "Development of Commercial Wood Preservatives", 2 avril 2008 (2008-04-02), American Chemical Society, Washington, DC, XP055235565, ISBN: 978-0-8412-2120-8 vol. 982, pages 272-284, DOI: 10.1021/bk-2008-0982.ch016, * Titre "Antioxidants" * * Titre "Metal Chelators" ***

• **Tor P Schultz ET AL: "REVIEW OF LABORATORY AND OUTDOOR EXPOSURE EFFICACY RESULTS OF ORGANIC BIOCIDE: ANTIOXIDANT COMBINATIONS, AN INITIAL ECONOMIC ANALYSIS AND DISCUSSION OF A PROPOSED MECHANISM Professor Forest Products Department", Wood and Fiber Science 37(1), 1 janvier 2005 (2005-01-01), pages 175-184, XP055235545, Extrait de l'Internet: URL:http://fwrc.msstate.edu/pubs/woodandfiber37-01.pdf [extrait le 2015-12-10]**

• **BAKTHAVACHALAM BABU ET AL: "PRODUCTION OF NATURAL BUTYLATED HYDROXYTOLUENE AS AN ANTIOXIDANT BY FRESHWATER PHYTOPLANKTON 1", JOURNAL OF PHYCOLOGY., vol. 44, no. 6, 1 décembre 2008 (2008-12-01), pages 1447-1454, XP055235554, US ISSN: 0022-3646, DOI: 10.1111/j.1529-8817.2008.00596.x**

• **PACKER L ET AL: "ANTIOXIDANT ACTIVITY AND BIOLOGIC PROPERTIES OF A PROCYANIDIN-RICH EXTRACT FROM PINE (PINUS MARITIMA) BARK, PYCNOGENOL", FREE RADICAL BIOLOGY AND MEDICINE, ELSEVIER INC, US, vol. 27, no. 5/06, 1 janvier 1999 (1999-01-01), pages 704-724, XP001120382, ISSN: 0891-5849, DOI: 10.1016/S0891-5849(99)00090-8**

- SONIA TOURIÑO ET AL: "Procyanidin Fractions from Pine ( Pinus pinaster ) Bark: Radical Scavenging Power in Solution, Antioxidant Activity in Emulsion, and Antiproliferative Effect in Melanoma Cells", JOURNAL OF AGRICULTURAL AND FOOD CHEMISTRY, vol. 53, no. 12, 1 juin 2005 (2005-06-01), pages 4728-4735, XP055235858, US ISSN: 0021-8561, DOI: 10.1021/jf050262q
- SERGE LEKOUNOUGOU ET AL: "Effects of propiconazole on extra-cellular enzymes involved in nutrient mobilization during Trametes versicolor wood colonization", WOOD SCIENCE AND TECHNOLOGY ; JOURNAL OF THE INTERNATIONAL ACADEMY OF WOOD SCIENCE, SPRINGER, BERLIN, DE, vol. 42, no. 2, 20 September 2007 (2007-09-20), pages 169-177, XP019585409, ISSN: 1432-5225
- J. Oliva ET AL: "Influence of several fungicides on the antioxidant activity of red wines (var. Monastrell)", JOURNAL OF ENVIRONMENTAL SCIENCES AND HEALTH B: PESTICIDES., vol. 44, no. 6, 13 July 2009 (2009-07-13), pages 546-552, XP055462399, XX ISSN: 0360-1234, DOI: 10.1080/03601230902997758
- VARGAS IRASEMA ET AL: "ANTIMICROBIAL AND ANTIOXIDANT COMPOUNDS IN THE NONVOLATILE FRACTION OF EXPRESSED ORANGE ESSENTIAL OIL", JOURNAL OF FOOD PROTEC, INTERNATIONAL ASSOCIATION FOR FOOD PROTECTION, US, vol. 62, no. 8, 1 August 1999 (1999-08-01) , pages 929-932, XP009080545, ISSN: 0362-028X
- Lucia Donnarumma ET AL: "Use of Essential Oils in Control Strategies against Zucchini Powdery Mildew", JOURNAL OF PHYTOPATHOLOGY - PHYTOPATHOLOGISCHE ZEITSCHRIFT., vol. 163, no. 11-12, 21 March 2015 (2015-03-21), pages 877-885, XP055462666, DE ISSN: 0931-1785, DOI: 10.1111/jph.12387
- ORTH A B ET AL: "Assessing the Involvement of Free Radicals in Fungicide Toxicity Using @a-Tocopherol Analogs", PESTICIDE BIOCHEMISTRY AND PHYSIOLOGY, ACADEMIC PRESS, US, vol. 47, no. 2, 1 October 1993 (1993-10-01), pages 134-141, XP024798882, ISSN: 0048-3575, DOI: 10.1006/PEST.1993.1071 [retrieved on 1993-10-01]

**EP 3 146 840 B1**

**Description**

La présente invention est du domaine des compositions pour des usages en tant que biocide et, en particulier, en tant que pesticide. Elle concerne, plus particulièrement, les compositions fongicides, permettant d'éradiquer les microorganismes tels que les champignons responsables de la détérioration des structures en bois comme les charpentes, les bardages ou les éléments de mobilier.

Les produits fongicides sont généralement des formulations incorporant un agent bioactif contenant une molécule organique ayant une action préventive, visant à empêcher le développement des spores dans le bois, et/ou curative, visant à stopper la croissance des champignons parasitaires dans le bois. Ces agents bioactifs, qui sont ici des agents biocides, voire des agents pesticides, ont un spectre d'action relativement large, et pour en diminuer les effets néfastes sur les organismes vivants non ciblés, ils doivent être utilisés à une concentration qui soit la plus basse possible.

Des adjuvants sont parfois ajoutés, leur rôle est d'améliorer le mode d'action de l'agent biocide, ou pesticide, qui peut alors être utilisé de manière efficace à de plus faibles concentrations. Par exemple, il est connu d'avoir recours, en combinaison avec des fongicides tels que le propiconazole, à un antioxydant, tel que l'hydroxytoluène butylé (en anglais « butylated hydroxytoluene », BHT) ou le propyle de gallate (PG), comme décrit dans l'article de Schultz et al. Wood and Fiber Science, 37(1), 2005, pp. 175-184. Des combinaisons sont également décrites dans l'article de Schultz et al., intitulé « Development of environmentally-benign wood preservatives based on the combination of organic biocides with antioxidants and metal chelators » (PHYTOCHEMISTRY, PERGAMON PRESS, GB, vol. 61, no.5,1 novembre 2002 (2002-11-01), pages 555-560).

Cependant, l'utilisation de ces antioxydants, BHT et PG, est très controversée, étant donné qu'ils sont considérés comme des substances préoccupantes car toxiques, aussi bien par la réglementation de l'Union Européenne, que par la règlementation Nord-Américaine.

Dans ce cadre, il est recherché l'utilisation de compositions contenant une substance biocide compatible avec les critères d'innocuités établis par le règlement européen (UE) n°528/2012, faisant suite à la directive européenne 98/8/CE et/ou une substance pesticide compatible avec les critères d'innocuités établis par le règlement européen (UE) n°1107/2009, faisant suite à la directive européenne 91/414/CEE. Pour ce faire, la teneur en substance biocide ou pesticide doit être abaissée au maximum dans la composition, et les adjuvants utilisés en combinaison avec la substance biocide ou pesticide ne doivent pas être des produits chimiques de synthèse toxiques. La composition doit en particulier viser à l'éradication de champignons nuisibles pour les bois, sans pour autant être néfaste pour l'homme, pour les animaux autres que ceux détériorant le bois, ou l'environnement.

Pour pallier tout ou partie des inconvénients précités, la présente invention concerne, selon un premier aspect, une composition biocide, en particulier pour une action fongicide, comprenant une ou plusieurs substances biocides et un adjuvant compris dans la catégorie des substances naturelles et des antioxydants, et qualifié d'antioxydant naturel. Les inventeurs ont montré de manière fortuite la synergie d'action entre les antioxydants naturels et la substance biocide, choisie de préférence parmi les substances pesticides, ce qui permet d'abaisser la concentration utile en substance biocide et/ou pesticide dans la composition.

La portée de l'invention est définie par les revendications. Tout objet non compris dans la portée des revendications est décrit à titre illustratif.

Le terme substance naturelle désigne soit une substance purifiée isolée de son milieu d'origine, soit une substance utilisée en combinaison avec tout ou partie de son milieu d'origine, comme par exemple une graine ou un pépin contenant ladite substance.

La composition selon l'invention comprend avantageusement un chélateur (en anglais « chelator »), sélectionné parmi au moins l'une des substances suivantes : l'acide éthylène diamine tétraacétique (EDTA), le sel tétrasodique de l'acide N,N-dicarboxyméthyl glutamique (GLDA), l'acide diéthylène triamine penta acétique (DTPA), l'acide (2- Hydroxyéthyl) éthylène diamine triacétique (HEDTA), l'acide nitrilotriacétique (NTA), l'acide propylène diamine tétra acétique (PDTA), l'éthanol glycine (EDG), le glucoheptonate, le gluconate de sodium, et l'acide gluconique,... La présence du chélateur dans le milieu permet d'améliorer la stabilité et donc l'efficacité de la composition fongicide en montrant une diminution de la perte de masse des échantillons de bois traités. De préférence, le chélateur, encore qualifié d'agent chélatant, est l'EDTA.

La teneur en chélateur, exprimée en pourcentage massique par rapport au poids total de la composition, est de 0,5 à 5%.

Avantageusement, la substance biocide est choisie parmi les triazoles, les ammoniums quaternaires, et les carbamates.

Avantageusement, la substance biocide est une substance fongicide sélectionnée parmi le propiconazole, le tébuconazole, le chlorure de didécyldiméthylammonium (en anglais « N, N-didécyl-N, N-dimethylammonium chloride », DDAC), le chlorure de benzalkonium (BKC), et le 3-iodo-2-propynyl-butylcarbamate (IPBC). La composition selon l'invention pouvant comprendre avantageusement au moins deux des cinq substances biocides précitées dans le cadre de l'invention.

Le propiconazole est un agent de protection du bois. L'efficacité du propiconazole est connue contre les champignons de discoloration du bois, les moisissures, le bleuissement, les pourritures cubiques, fibreuses et la pourriture sèche (mérule) en vue de la préservation des bois en classes d'emploi correspondant à des usages intérieur et extérieur et au contact du sol.

Le tebuconazole, tout comme le propiconazole, est une substance fongicide efficace comme l'atteste notamment l'article de Buschhaus et al. International Research Group on Wood Preservation, 1995.

Le 3-iodo-2-propynyl-butylcarbamate est décrit comme substance fongicide présentant une toxicité acceptable pour le traitement préventif des bois dans l'article de Hansen, J. IPBC - A new fungicide for wood protection. IRG, Wood Preservation, 1984, Document Number 3295.

Le N, N- didécyl -N, N-diméthylammonium (DDAC) est un agent efficace en tant que fongicide et fongistatique. Des applications en tant qu'insecticide sont également connues.

La composition selon l'invention comporte une teneur en substance biocide inférieure à 2000 g/m$^3$, voire inférieure à 1200 g/m$^3$. Selon des modes de réalisation préférés, la teneur en substance biocide est de 100 à 500 g/m$^3$, et avantageusement elle est de 150 à 450 g/m$^3$. De telles teneurs en substance biocide sont suffisamment faibles pour ne pas impacter l'environnement extérieur au bois, tout en garantissant une action efficace en combinaison avec l'antioxydant et/ou le chélateur.

Avantageusement, la composition selon l'invention comporte deux substances biocides sélectionnées parmi les substances biocides décrites dans le cadre de l'invention, prises dans une teneur totale en substance biocide de 100 à 150 g/m$^3$. L'association d'au moins deux substances biocides, en synergie avec l'antioxydant, permet de réduire encore d'avantage la dose nécessaire en substance biocide. Par exemple :

- pour un mélange de propiconazole avec du tébuconazole (1:1), la dose efficace est à 200-250 g/m$^3$ sans l'ajout de l'antioxydant et du séquestrant ; et
- avec ajout de l'antioxydant, cette dose efficace est réduite de moitié.

Avantageusement l'antioxydant naturel est obtenu à partir de l'une des sources biologiques végétales suivantes : le pin maritime, le cacao, l'arachide, et le raisin.

L'antioxydant naturel est avantageusement obtenu à partir d'un extrait de pépin de raisin riche en polyphénols, et en particulier riche en oligomères procyanidoliques (OPCs). L'extrait de pépin de raisin utilisé dans ce cadre, et connu sous la dénomination anglo-saxonne "Grape seed extract", comporte au moins 99% d' OPCs.

L'antioxydant naturel est avantageusement obtenu à partir d'un extrait d'écorce de pin maritime riche en polyphénols, et en particulier riche en oligomères procyanidoliques (OPCs). L'extrait d'écorce de pin maritime utilisé dans ce cadre comporte au moins 90% d'OPCs.

L'antioxydant naturel est avantageusement obtenu à partir d'un extrait de pellicule de graine d'arachide, ou de pellicule sèche de cacahuète, riche en polyphénols, et en particulier riche en oligomères procyanidoliques (OPCs).

Les termes flavonoïdes, procyanidols, proanthocyanidols, tanins catéchiques et oligomères flavanoliques totaux (OFT) sont utilisés indifféremment pour désigner la même classe de molécules également connue sous le nom d'oligomères procyanidoliques (OPCs).

Avantageusement, l'antioxydant naturel est un polyphénol susceptible d'être obtenu à partir d'une source biologique végétale. Parmi les polyphénols d'intérêt dans la cadre de l'invention on peut citer :

- les phénols simples, tels que le tyrosol extrait de l'olive ;
- les acides hydroxycinnamiques, tels que l'acide chlorogénique extrait du café vert ;
- les stylbénoïdes, tels que le resveratrol extrait du raisin ;
- les tanins hydrolysables, tels que le tanin gallique extrait du châtaignier ;
- les tanins condensés, tels que les oligomères procyanidoliques extraits du pépin de raisin ou de l'écorce de pin ; et
- les anthocyanes, tels que le cyanidol extrait des fruits rouges tels que la framboise.

La composition selon l'invention pouvant comprendre avantageusement au moins deux des antioxydants naturels susceptibles d'être obtenus à partir des sources précitées dans le cadre de l'invention.

La composition selon l'invention comporte une teneur en antioxidant naturel de 0.2 à 5%.

La présente invention concerne aussi une formulation fongicide comportant la composition selon l'invention diluée dans de l'eau et prête à l'emploi. Ainsi la composition est directement en phase à aqueuse dans les conditions prêtes à l'emploi.

Selon un autre aspect, la présente invention concerne une utilisation de la composition, ou de la formulation, telle que décrite précédemment dans le cadre de la présente invention pour le traitement préventif et curatif des pathologies fongiques du bois.

La présente invention sera mieux comprise à la lecture de la partie expérimentale détaillée qui suit, dont les exemples de réalisation sont uniquement donnés à titre illustratif, et qui ne peuvent en aucune façon être considérés comme limitatifs.

PARTIE EXPERIMENTALE

## Ingrédients entrant dans la préparation des compositions fongicides

Les substances biocides utilisées sont le tébuconazole (97,4% de pureté), le propiconazole (97,4% de pureté), le 3-iodo-2-propynyl-butylcarbamate - IPBC (98% de pureté) et le chlorure de didécyldiméthylammonium - DDAC (79,6% de pureté).

Les extraits de plantes contenant l'antioxydant sont les suivants :

- un extrait de pellicule de graine d'arachide riche en oligomères procyanidoliques (OPCs) ;
- un extrait d'écorce de pin comportant au moins 90% d'OPCs ; et
- deux extraits de pépin de raisin (*Vitis vinifera*), représenté par un extrait connu et un extrait comportant au moins 99% d' OPCs.

Ces extraits sont obtenus et vendus par le Groupe BERKEM.

### Pin

L'extrait d'écorce de pin est fabriqué à partir de l'écorce de pin maritime séchée et broyée, suivi d'une extraction solide/liquide initiale à l'eau, puis d'une récupération de la phase aqueuse par filtration. La purification est effectuée par extraction sélective liquide/liquide et séchage. Le procédé utilisé est décrit dans les demandes FR 2 092 743 et FR 2 722 498.

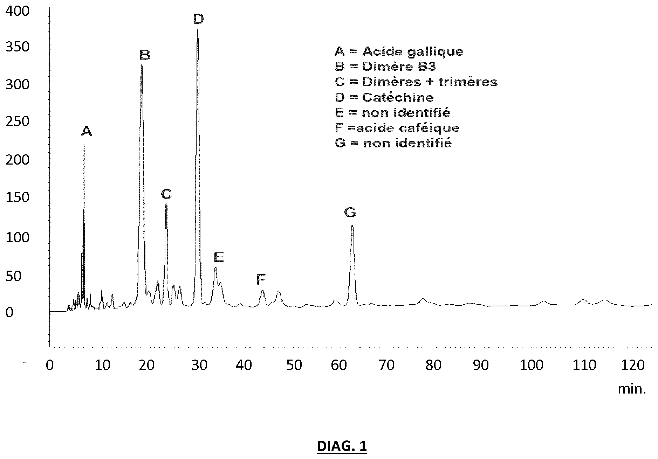

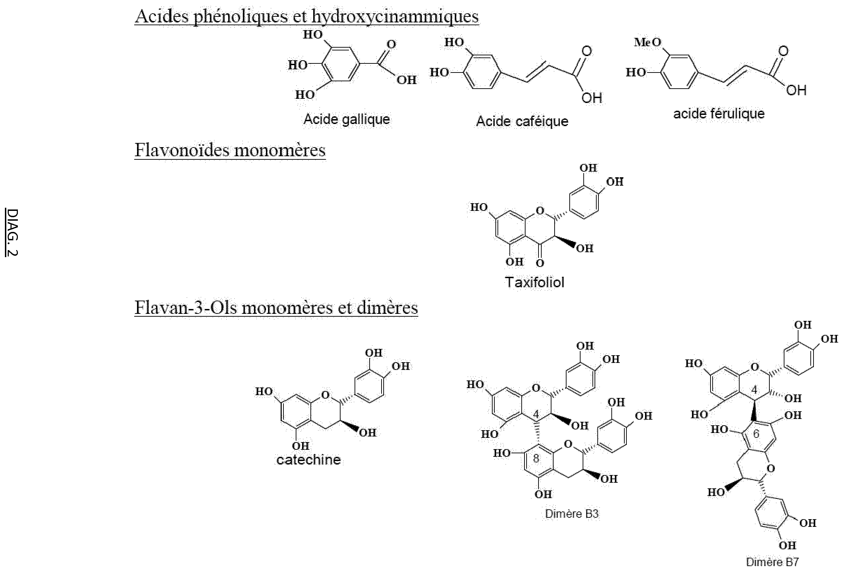

Les principaux constituants dudit extrait sont quantifiés par chromatographie liquide haute performance en phase inverse avec détection par absorption ultraviolette (voir le diagramme 1 donne le profil HPLC). Le taux de dérivés catéchiques totaux est supérieur ou égal à 30% de l'extrait. La somme de la catéchine et procyanidol dimère B3 (voir diagramme 2) ne doit pas être inférieure à 17%. Les acides phénoliques, hydroxycinnamiques et le taxifoliol sont présents en quantités très faibles ne dépassant pas 3%.

### Pellicule de graine d'arachide

Les pellicules sèches de cacahuètes (*Arachis hypogaea L*) sont traitées soit à température ambiante ou à chaud avec les solvants suivants : l'eau, au moins un solvant organique (éthanol, acétone) ou des mélanges eau et solvants organiques dans des proportions variables. L'extrait liquide obtenu est concentré par des moyens appropriés (évaporation sous pression réduite) pour réduire et ou éliminer les solvants organiques. Le résidu est reconcentré et on effectue un lavage et une extraction dans un mélange eau/acétate d'éthyle. L'extrait final est ensuite obtenu par nébulisation ou lyophilisation.

L'extrait de pellicule de la graine d'arachide (*Arachis hypogaea L*) contient des polyphénols appartenant aux trois groupes ci-dessous :

- Acides phénoliques (acide gallique, acide caféique et acide chlorogénique) ;
- Les hydroxystilbènes (trans-resveratrol) ; et
- Les flavonoïdes (dont monomères et oligomères de flavan-3-ols).

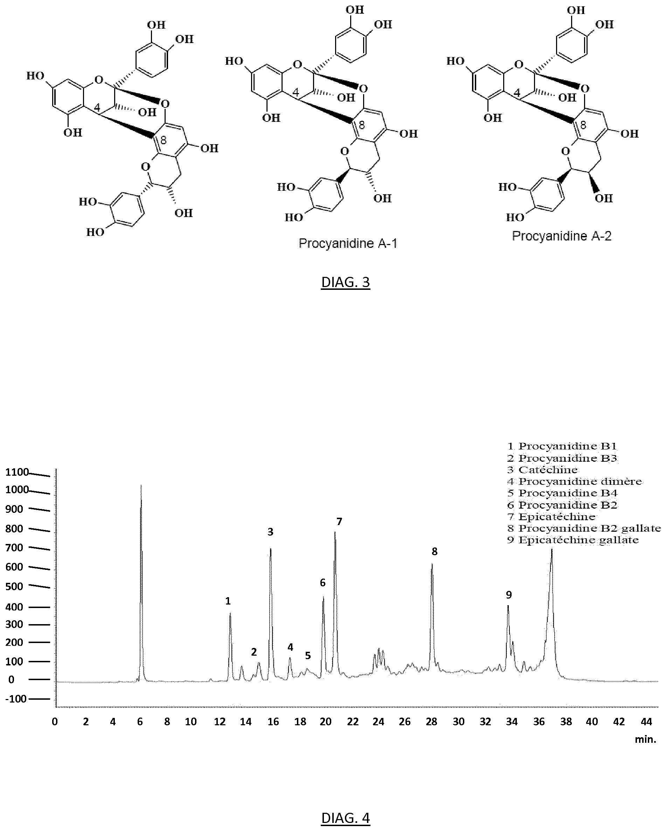

Les flavonoïdes contenus dans les OPCs de la pellicule de l'arachide sont composés majoritairement d'oligomères appartenant à la série A (1 liaison interflavanique et 3 liaisons éthers par dimère, voir le diagramme 3.). Une liaison interflavanique est la liaison entre des unités monomériques telles que la catéchine.

### Raisin

L'extrait de pépin de raisin comportant au moins 99% d'OPCs est fabriqué à partir des pépins de raisin blancs séchés, débarrassés de la pulpe et non fermentés. Une extraction initiale à l'eau est effectuée, puis suivie d'une récupération de la phase aqueuse par filtration. La purification est effectuée par extraction sélective liquide/liquide et séchage. Le procédé utilisé est décrit dans les demandes FR 2 092 743 et FR 2 722 498.

Les principaux constituants dudit extrait sont quantifiés par chromatographie liquide haute performance en phase inverse avec détection par absorption ultraviolette (voir le diagramme 4 qui donne le profil HPLC).

La somme des flavanols monomères se situe entre 18 et 32% de l'extrait, et celles des flavanols dimères est entre 30 et 40%.

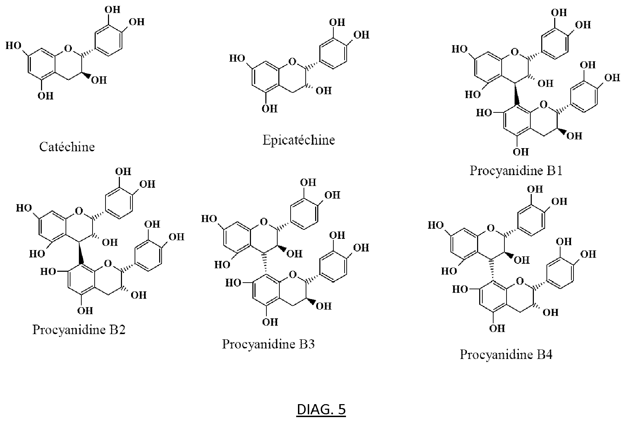

Les exemples de formules chimiques des constituants dudit extrait de pépin de raisin sont rappelés au diagramme 5.

## Extrait de pépin de raisin connu

Cet extrait est obtenu à partir des mêmes matières premières que l'autre extrait, c'est-à-dire à partir de pépins de raisin blancs non fermentés. Le solvant d'extraction initiale solide/liquide est le même (eau). La phase aqueuse est directement séchée (atomisation ou lyophilisation) sans subir d'étapes de purification.
L'extrait obtenu contient le même type de polyphénols que l'extrait comportant au moins 99% d'OPCs, mais en quantités moins importantes.

La somme de flavanols des monomères se situe entre 5 et 7% de l'extrait (soit une moyenne d'environ 6%). Comparé à l'extrait comportant au moins 99% d'OPCs, (valeur moyenne en flavanols monomères d'environ 25%), cet extrait de pépin de raisin est en moyenne quatre fois moins riche en monomères que l'autre extrait.
Quant au total des flavanols dimères il est entre 5 et 7% (environ 6% en moyenne). Il est d'environ 5 à 7 fois moins élevé que dans le cas de l'extrait comportant au moins 99% d'OPCs.

L'acide éthylène diamine tétraacétique (EDTA) a été choisi pour l'étude comme chélateur. Il ne contient pas d'eau cristalline et est hygroscopique, il est partiellement soluble dans l'eau, l'éthanol, l'acétone et le phénol. L'EDTA est soluble dans les acides minéraux et le formamide chaud. Le sel disodique de l'acide éthylène diamine tétraacétique technique (EDTA) et l'éthanol (99% de pureté) utilisés ont été obtenus notamment auprès de VWR®.

### Conditions expérimentales pour les tests d'efficacité des compositions fongicides

Méthode pour évaluer l'efficacité fongicide :

Le champignon utilisé pour les essais est un champignon de pourriture brune *Postia placenta* FPRL 280. Les tests ont été réalisés en suivant les informations des articles de Gao et al. Antifungal activities of heartwood extracts of Port-Orford cedar extractives, 2008, Holzforschung 62, pp 620-623 et de Chang et al. 1999. Antifungal compounds in the ethyl acetate soluble fraction of the extractives of Taiwania (Taiwania cryptomerioides Hayata) heartwood., 1999, Holzforschung 53, pp. 487-490. Les extraits de plantes et/ou l'EDTA ont été dissous dans de l'eau distillée, tandis que le tébuconazole a été dissous séparément dans de l'éthanol. Des solutions tests de différentes concentrations ont été mélangées avec du malt-agar stérilisé et introduites dans des boîtes de Pétri. Le milieu a été préparé avec 2,5% d'extrait de malt et 1,5% de gélose et stérilisé pendant 23 min. Les prélèvements fongiques effectués à partir du bord de cultures en croissance active ont été transférés sur le centre des boites de Pétri et incubés dans une pièce sombre à 25°C et 75% d'humidité relative. Tous les essais ont été effectués en trois fois. Lorsque les mycéliums des champignons ont atteint les bords des boîtes de Pétri, le diamètre de toutes les boîtes expérimentales ayant été mesuré, l'indice antifongique exprimée en % d'inhibition a été calculé comme suit :

$$\text{Indice antifongique \%} = (1 - D1 / D2) \times 100$$

Où D1 est le diamètre de la croissance dans les boîtes de Pétri, et D2 est le diamètre de la croissance dans les boîtes témoins qui contenaient un milieu de culture seulement.

Tests d'efficacité (« screening test ») :

Quatre extraits de plantes à trois concentrations définies et un chélateur métallique à une concentration constante ont été testés (tableau 1).
Des échantillons d'aubier de pin sylvestre (*Pinus sylvestris L.*) avec des dimensions de 40 x 15 x 4 mm (dans le sens de la fibre) ont été utilisés tout au long de l'étude. Les échantillons ont été imprégnés dans un autoclave dans lequel un vide de 60% a été créé pendant 30 minutes puis laissé dans la solution pendant 2h, assurant ainsi une imprégnation complète des cellules du bois. Les échantillons de bois ont été ensuite retirés de la solution de traitement, essuyés doucement pour éliminer la solution résiduelle à la surface du bois, et pesés. Le poids enregistré a été utilisé pour calculer la rétention.

Les tests ont été effectués dans des conditions identiques à celles de l'essai décrit dans la norme européenne EN 113. Après séchage à la température ambiante et conditionnement à 20°C et 65% d'humidité relative, les échantillons ont été stérilisés et exposés au champignon basidiomycète *Postia placenta* FPRL 280. Quatre échantillons traités et trois échantillons témoins non traités ont été placés dans chaque flacon Kolli. Il convient de souligner qu'aucune lixiviation des échantillons traités n'a été appliquée avant l'exposition. L'évaluation du test a été basée sur la perte de masse enregistrée (ML) après une période d'exposition (16 semaines). Selon la norme EN 113, la protection prévue pour le bois est considérée comme suffisante si la perte moyenne en masse des échantillons est inférieure à 3% de leur masse sèche initiale. Ce principe a été adopté pour évaluer l'efficacité des formulations testées.

Les variables étudiées sont présentées dans le tableau 1.

Tableau 1.

| | Conc. Min. efficace, (g/m$^3$) | Appr. 50% conc., (g/m$^3$) | Nombre d'antioxi. testé | Conc. antiox., % | Chelateur EDTA, % |
|---|---|---|---|---|---|
| Tébuconazole | 450 | 200 | 4 | 0.5 - 2 - 4 | 3 |
| Propiconazole | 390 | 200 | 4 | 0.5 - 2 - 4 | 3 |
| IPBC | 300 | 150 | 4 | 0.5 - 2 - 4 | 3 |
| DDAC | 1800 | 1000 | 4 | 0.5 - 2 - 4 | 3 |

Les concentrations sont données par rapport à la masse totale de la composition. La première colonne du tableau 1 définit la substance biocide testée, la deuxième colonne donne sa concentration efficace, la troisième colonne donne la dose évaluée correspondant sensiblement à 50% de la concentration efficace, la quatrième colonne donne le nombre d'antioxydant testés par substance biocide, la cinquième colonne définit les trois concentrations en antioxydant évaluées et la sixième colonne donne la concentration en EDTA.

Tests modifiés pour l'étude de la synergie :

Sur la base des résultats du « screening test » présenté ci-dessus, un nouveau test standard en s'inspirant de la norme EN 113 (1996) avec les fongicides sélectionnés et les antioxydants (AO) a été mis au point. Des blocs d'aubier de pin sylvestre de 15 × 25 × 50 mm de dimension (dans le sens de la fibre) ont été traités par un procédé d'imprégnation à cellules pleines. Le tébuconazole a été testé à des teneurs de 150 et 250 g/m$^3$ et l'IPBC à 100 et 200 g/m$^3$. Ils ont été dissous dans de l'éthanol comme solvant, éventuellement en présence de l'antioxydant (pépin de raisin ou d'écorce de pin) à une concentration de 0,2 à 1,5% et de 3% de chélateur (EDTA). Les tests ont été reproduits dix fois. Après traitement, les échantillons ont été pesés et séchés à température ambiante. Avant l'exposition au champignon, les échantillons ont été lessivés pendant deux semaines, puis conditionnés selon la norme EN 84. L'efficacité du traitement a été évaluée par la perte de masse après 16 semaines d'exposition au champignon de pourriture brune *Postia placenta* FPRL 280.

Conditions expérimentales pour les mesures par spectroscopie infrarouge :

Les spectres d'absorption infrarouge ont été obtenus en utilisant la technique de la pastille de KBr sur un spectromètre FTIR Perkin - Elmer Paragon 1000 PC™ (résolution de 4 cm - 1, 50 balayages). Des échantillons de bois pour l'analyse FTIR ont été préparés en découpant les blocs traités en petits morceaux et en broyant ensuite les morceaux dans un broyeur Wiley™ pour obtenir des particules fines. Dans chaque cas, 1 % (p/p) de composé sec est dispersé dans une matrice de KBr et pressée pour former une pastille.

**Résultats expérimentaux**

Les tests ont été effectués en utilisant les petits échantillons de dimension 40 x 15 x 5 mm pour tester la synergie de la combinaison : biocide / antioxydant / chélateur. Les quatre substances biocides (tébuconazole, propiconazole, IPBC et DDAC) à deux niveaux, avec ou sans antioxydants naturels à 0.5, 2 et 4 % et/ou 3 % de l'agent chélatant (EDTA) ont été testés. Au cours de ces essais préliminaires, dans lequel les échantillons traités n'ont pas été lessivés, l'efficacité de chaque traitement a été évaluée par la perte de masse après 16 semaines d'exposition au champignon de pourriture brune *P. placenta.* Les tests (tableau 2.) indiquent que l'EDTA seul a eu peu d'effet de protection contre le champignon de pourriture brune *P. placenta* (7,7% de perte de masse). Les résultats ont montré aussi que, à l'exception du DDAC, tous les biocides étudiés fournis ont montré un niveau de protection élevé contre *P. placenta* à la concentration minimale efficace. Lorsque les concentrations de biocides ont été réduites de moitié (50% de la concentration efficace), uniquement le tébuconazole était toujours suffisamment actif. L'addition de 3% d'EDTA a augmenté l'efficacité de tous les biocides, sauf pour le tébuconazole, pour lequel l'efficacité a été légèrement diminuée.

Tableau 2. Perte de masse moyenne mesurée sur les échantillons de bois non lessivés traités avec les quatre biocides et l'EDTA après l'exposition au champignon de la pourriture brune *P. placenta* pendant 16 semaines.

| Concentration | EDTA | Tébuconazole | Propiconazole | IPBC | DDAC |
|---|---|---|---|---|---|
| 3% | 7.7 (0.2) | | | | |
| 100% | | -5.9 (2.6) | -4.1 (2.4) | -1.1 (1.9) | 4.8 (0.9) |
| 50% | | 00 (1.2) | 6.1 (9.0) | 31.8 (18.3) | 5.5 (4.2) |
| 50% + 3% d'EDTA | | 3.2 (0.6) | 3.6 (3.7) | 9.0 (1.2) | 4.0(1.3) |

Les antioxydants ont également été étudiés séparément et en combinaison avec de l'EDTA. Parmi les quatre extraits de plantes étudiés (Tableau 3), seul l'extrait d'arachide à 2 et 4 % a présenté de puissants effets inhibiteurs contre les champignons, probablement en raison de la solubilité limitée de cet extrait (taille de particules relativement grande) qui reste en surface après l'imprégnation des échantillons. Après l'ajout de 3% d'EDTA, une efficacité accrue a été observée pour tous les extraits, mais la perte de masse est toujours supérieure à 3%.

Tableau 3. Perte de masse moyenne mesurée sur les échantillons de bois non lessivés traités avec des extraits de plantes et de l'EDTA, après l'exposition au champignon de la pourriture brune *P. placenta* pendant 16 semaines.

| Extraits | 0.5% | 2% | 4% | 0.5% 3% EDTA | 2% 3% EDTA | 4% 3% EDTA |
|---|---|---|---|---|---|---|
| Pin maritime | 31.5 (2.5) | 30.9 (5.5) | 29.5 (13.7) | 5.5 (4.9) | 4.0 (0.4) | 3.8 (0.9) |
| arachide | 43.8 (19.1) | 2.1 (0.3) | -0.8 (2.6) | -0.9 (0.5) | 2.2 (1.1) | 0.8 (2.2) |
| Pépin de raisin (extrait connu) | 29.0 (11.9) | 37.2(12.0) | 26.8(19.6) | 5.7(9.7) | 6.4 (3.4) | 3.3 (0.3) |
| Extrait de pépin à 99% d'OPCs | 27.2 (13.1) | 36.4 (11.8) | 31.0 (14.8) | 4.0 (2.2) | 3.3 (1.4) | 0.5 (1.2) |

Des tests ont également été effectués avec les extraits de plantes mélangés avec chacun des quatre biocides (à 50 % de leur concentration efficace). Il a été observé une bonne efficacité du tébuconazole et du propiconazole (plus de 3% de perte de masse), tandis que l'IPBC et DDAC ne sont pas efficaces (voir tableau 4, 5 et 6).

Tableau 4. Perte de masse moyenne mesurée sur les échantillons de bois non lessivés traités avec les quatre biocides (50% de la concentration efficace), et des extraits de plantes à 0,5% de concentration après l'exposition au champignon de la pourriture brune *P. placenta* pendant 16 semaines.

| 0.5% | Tébuconazole | Propiconazole | IPBC | DDAC |
|---|---|---|---|---|
| Pin maritime | 1.3 (0.2) | 28.0 (9.6) | 3.7 (1.4) | 13.4 (5.9) |
| Arachide | 0.8 (0.2) | 0.5(0.3) | 11.9 (9.1) | 2.9(0.4) |
| Pépin de raisin (extrait connu) | 1.0 (0.2) | 0.8 (0.1) | 13.0 (20.6) | 4.3 (1.5) |
| Extrait de pépin à 99% d'OPCs | 1.3 (0.2) | 0.9(0.2) | 3.5 (2.0) | 22.9 (2.9) |

Tableau 5. Perte de masse moyenne mesurée sur les échantillons de bois non lessivés traités avec les quatre biocides (50% de la concentration efficace), et des extraits de plantes à 2% de concentration après l'exposition au champignon de la pourriture brune *P. placenta* pendant 16 semaines.

| 2% | Tébuconazole | Propiconazole | IPBC | DDAC |
|---|---|---|---|---|
| Pin maritime | 0.7 (0.3) | 1.7 (1.4) | 45.7 (9.6) | 21.0 (2.5) |
| Arachide | 0.9 (0.2) | 2.5 (2.3) | 0.8 (0.5) | 2.6 (0.2) |
| Pépin de raisin (extrait connu) | 1.4 (0.2) | 1.5 (0.3) | 3.5 (7.2) | 4.7 (3.9) |
| Extrait de pépin à 99% d'OPCs | 0.6 (0.3) | 2.9 (3.6) | 0.9 (1.1) | 9.6 (5.8) |

Tableau 6. Perte de masse moyenne mesurée sur les échantillons de bois non lessivés traités avec les quatre biocides (50% de la concentration efficace), et des extraits de plantes à 4% de concentration après l'exposition au champignon de la pourriture brune *P. placenta* pendant 16 semaines.

| 4% | Tébuconazole | Propiconazole | IPBC | DDAC |
|---|---|---|---|---|
| Pin maritime | 0.8(0.1) | 11.2 (17.7) | 5.6 (4.0) | 9.8 (5.9) |
| Arachide | 0.5 (0.4) | 1.4 (0.2) | 1.4 (0.2) | 2.9 (2.0) |
| Pépin de raisin (extrait connu) | 2.3 (5.0) | 1.6(0.2) | 5.0 (7.4) | 3.4 (3.9) |
| Extrait de pépin à 99% d'OPCs | 0.5 (0.3) | - | 2.1 (0.3) | 1.9 (0.4) |

L'efficacité a été encore améliorée par l'addition de 3% d'EDTA (tableau 7, 8 et 9). Ceci est particulièrement illustré avec IPBC comme biocide où l'amélioration a été constatée dans tous les cas.

Tableau 7. Perte de masse moyenne mesurée sur les échantillons de bois non lessivés traités avec les quatre biocides (50% de la concentration efficace), des extraits de plantes à 0,5% de concentration, et 3% d'EDTA, après l'exposition au champignon de la pourriture brune *P. placenta* pendant 16 semaines.

| 0.5% 3% EDTA | Tebuconazole | Propiconazole | IPBC | DDAC |
|---|---|---|---|---|
| Pin maritime | 0.8 (0.5) | 2.0 (1.4) | 0.5 (0.6) | - |
| Arachide | -0.2 (1.3) | 1.9 (1.0) | 1.6 (1.3) | - |
| Pépin de raisin (extrait connu) | 1.4 (0.8) | 1.5 (0.9) | 1.6 (0.7) | - |
| Extrait de pépin à 99% d'OPCs | 0.5 (0.7) | 1.0 (1.4) | 1.2(1.4) | - |

Tableau 8. Perte de masse moyenne mesurée sur les échantillons de bois non lessivés traités avec les quatre biocides (50% de la concentration efficace), des extraits de plantes à 2% de concentration, et 3% d'EDTA, après l'exposition au champignon de la pourriture brune *P. placenta* pendant 16 semaines.

| 2% 3% EDTA | Tebuconazole | Propiconazole | IPBC | DDAC |
|---|---|---|---|---|
| Pin maritime | 2.0 (1.3) | 1.4 (1.3) | 0.9 (0.3) | - |
| Arachide | 2.1 (1.0) | 2.4 (1.2) | 1.2 (0.3) | - |

(suite)

| 2%<br>3% EDTA | Tebuconazole | Propiconazole | IPBC | DDAC |
|---|---|---|---|---|
| Pépin de raisin (extrait connu) | 1.8 (2.1) | 1.2 (1.2) | 0.7(0.1) | - |
| Extrait de pépin à 99% d'OPCs | 2.1 (1.1) | 2.0 (1.3) | 1.7(0.5) | - |

Tableau 9. Perte de masse moyenne mesurée sur les échantillons de bois non lessivés traités avec les quatre biocides (50% de la concentration efficace), des extraits de plantes à 4% de concentration, et 3% d'EDTA, après l'exposition au champignon de la pourriture brune *P. placenta* pendant 16 semaines.

| 4%<br>3% EDTA | Tebuconazole | Propiconazole | IPBC | DDAC |
|---|---|---|---|---|
| Pin maritime | 0.1 (2.2) | 1.2 (0.9) | 1.1 (0.2) | - |
| Arachide | 1.2 (1.1) | 2.2 (1.2) | 0.4 (1.1) | - |
| Pépin de raisin (extrait connu) | 2.1 (0.5) | 1.8 (1.5) | 0.8 (0.7) | - |
| Extrait de pépin à 99% d'OPCs | 1.1 (0.2) | 1.6 (0.7) | 0.6 (0.2) | - |

## Revendications

1. Composition fongicide comprenant une substance fongicide dans une teneur inférieure à 2000 g/m$^3$ et sélectionnée parmi le propiconazole, le tébuconazole, le chlorure de didécyldiméthylammonium, le chlorure de benzalkonium et le 3-iodo-2-propynyl-butylcarbamate ; un antioxydant naturel dans une teneur de 0.2 à 5% et consistant en un polyphénol susceptible d'être obtenu à partir d'une source biologique ; et un chélateur pris dans une teneur de 0.5 à 5% et sélectionné parmi l'acide éthylène diamine tétraacétique (EDTA), le sel tétrasodique de l'acide N,N-dicarboxyméthyl glutamique (GLDA), l'acide diéthylène triamine penta acétique (DTPA), l'acide (2-Hydroxyéthyl) éthylène diamine triacétique (HEDTA), l'acide nitrilotriacétique (NTA), l'acide propylène diamine tétra acétique (PDTA), l'éthanol glycine (EDG), le glucoheptonate, le gluconate de sodium, et l'acide gluconique.

2. Composition selon la revendication 1, dans laquelle l'antioxydant naturel est obtenu à partir de l'une des sources suivantes : le pin maritime, le cacao, l'arachide et le raisin.

3. Formulation fongicide comprenant la composition selon l'une des revendications 1 à 2 diluée dans de l'eau.

4. Utilisation de la composition ou de la formulation fongicide, selon l'une des revendications 1 à 3 pour le traitement préventif et curatif des pathologies fongiques du bois.

## Patentansprüche

1. Fungizid-Zusammensetzung, umfassend eine fungizide Substanz in einem Gehalt von weniger als 2000 g/m$^3$ und ausgewählt aus Propiconazol, Tebuconazol, Didecyldimethylammoniumchlorid, Benzalkoniumchlorid und 3-Iod-2-propinylbutylcarbamat; ein natürliches Antioxidans in einem Gehalt von 0,2 bis 5% und bestehend aus einem Polyphenol, das aus einer biologischen Quelle erhalten werden kann; und einen Chelator in einem Gehalt von 0,5 bis 5% und ausgewählt aus Ethylendiamintetraessigsäure (EDTA), dem Tetranatriumsalz von N,N-Dicarboxymethylglutaminsäure (GLDA), Diethylentriaminpentaessigsäure (DTPA), (2-Hydroxyethyl)ethylendiamintriessigsäure (HEDTA), Nitrilotriessigsäure (NTA), Propylendiamintetraessigsäure (PDTA), Ethanolglycin (EDG), Glucoheptonat, Natriumgluconat und Gluconsäure.

**2.** Zusammensetzung nach Anspruch 1, in der das natürliche Antioxidans aus einer der folgenden Quellen erhalten ist: der Seekiefer, dem Kakao, der Erdnuss und der Traube.

**3.** Fungizid-Formulierung, umfassend die Zusammensetzung nach einem der Ansprüche 1 bis 2, verdünnt in Wasser.

**4.** Verwendung der Fungizid-Zusammensetzung oder der Fungizid-Formulierung nach einem der Ansprüche 1 bis 3 zur vorbeugenden und heilenden Behandlung von Pilzpathologien von Holz.

**Claims**

**1.** Fungicide composition comprising a fungicide substance in a content less than 2000g/m$^3$ and selected from among propiconazole, tebuconazole, didecyldimethylammonium chloride, benzalkonium chloride and 3-iodo-2-propynyl-butylcarbamate; a natural antioxidant in a content of 0.2 to 5% and consisting of a polyphenol likely to be obtained from a biological source; and a chelator taken in a content of 0.5 to 5% and selected from among ethylene diamine tetra acetic acid (EDTA), tetra sodic salt of glutamic N,N-dicarboxymethyl acid (GLDA), diethylene triamine penta acetic acid (DTPA), (2-hydroxyethyl) ethylene diamine triacetic acid (HEDTA), nitrilotriacetic acid (NTA), propylene diamine tetra acetic acid (PDTA), ethanol glycine (EDG), glucoheptonate, sodium gluconate, and gluconic acid.

**2.** Composition according to claim 1, wherein the natural antioxidant is obtained from one of the following sources: maritime pine, cocoa, peanut and grape.

**3.** Fungicide formulation comprising the composition according to one of claims 1 to 2 diluted in water.

**4.** Use of the composition of the fungicide formulation, according to one of claims 1 to 3 to the preventive and curative treatment of the fungal pathologies of wood.

**DIAG. 1**

Acides phénoliques et hydroxycinammiques

Acide gallique

Acide caféique

acide férulique

Flavonoïdes monomères

Taxifoliol

Flavan-3-Ols monomères et dimères

catechine

Dimère B3

Dimère B7

EP 3 146 840 B1

Procyanidine A-1

Procyanidine A-2

DIAG. 3

1 Procyanidine B1
2 Procyanidine B3
3 Catéchine
4 Procyanidine dimère
5 Procyanidine B4
6 Procyanidine B2
7 Epicatéchine
8 Procyanidine B2 gallate
9 Epicatéchine gallate

DIAG. 4

Catéchine

Epicatéchine

Procyanidine B1

Procyanidine B2

Procyanidine B3

Procyanidine B4

DIAG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2092743

- FR 2722498

**Littérature non-brevet citée dans la description**

- **SCHULTZ et al.** *Wood and Fiber Science,* 2005, vol. 37 (1), 175-184
- Development of environmentally-benign wood preservatives based on the combination of organic biocides with antioxidants and metal chelators. PHYTOCHEMISTRY. PERGAMON PRESS, 01 Novembre 2002, vol. 61, 555-560
- **BUSCHHAUS et al.** *International Research Group on Wood Preservation,* 1995

- **HANSEN, J.** IPBC - A new fungicide for wood protection. *Wood Preservation,* 1984
- **GAO et al.** Antifungal activities of heartwood extracts of Port-Orford cedar extractives. *Holzforschung,* 2008, vol. 62, 620-623
- **DE CHANG et al.** Antifungal compounds in the ethyl acetate soluble fraction of the extractives of Taiwania (Taiwania cryptomerioides Hayata) heartwood. *Holzforschung,* 1999, vol. 53, 487-490